# EUROPÄISCHE PATENTSCHRIFT

(11) **EP 4 183 627 B1**
(45) Veröffentlichungstag und Bekanntmachung des Hinweises auf die Patenterteilung: **10.07.2024**
(21) Anmeldenummer: 22210428.3
(22) Anmeldetag: 18.05.2015
(51) Int. Cl.: B60Q 1/04

(54) **MONTAGEVERBUND EINER KRAFTFAHRZEUG-BELEUCHTUNGSEINRICHTUNG UND KRAFTFAHRZEUG**
ASSEMBLY OF A MOTOR VEHICLE LIGHTING DEVICE AND MOTOR VEHICLE
ASSEMBLAGE DE MONTAGE D'UN DISPOSITIF D'ÉCLAIRAGE DE VÉHICULE AUTOMOBILE ET VÉHICULE AUTOMOBILE

(30) Priorität: 03.07.2014 DE 102014212894; 18.09.2014 DE 102014218733
(43) Veröffentlichungstag der Anmeldung: 24.05.2023
(62) Teilanmeldung aus: 15722543.4
(73) Patentinhaber: Volkswagen Aktiengesellschaft, 38440 Wolfsburg (DE)
(72) Erfinder: Simanek, Ralf, 38518 Gifhorn (DE); Loose, Christoph, 38106 Braunschweig (DE)

(56) Entgegenhaltungen:
- EP-A2- 2 565 079
- CN-U- 202 966 097
- DE-A1- 102005 045 684
- DE-A1- 102013 012 227
- DE-B4- 19 950 763
- FR-A1- 2 886 614
- JP-A- 2001 270 381
- US-A- 3 385 617

## Beschreibung

Die Erfindung betrifft einen Montageverbund einer Kraftfahrzeug-Beleuchtungseinrichtung mit den Merkmalen vom Oberbegriff des Patentanspruchs 1.

Derartige Montageverbunde sind bereits aus dem allgemeinen Stand der Technik bekannt.

Dabei ist das Anbauteil zumeist in Form einer leistenartigen Zierblende ausgebildet. Der Einsatz von Zierblenden bei Kraftfahrzeug-Beleuchtungseinrichtungen soll zu einer optischen Aufwertung des Erscheinungsbildes führen.

Abschlussscheiben von Beleuchtungseinrichtungen, wie beispielsweise von Scheinwerfern oder Rückleuchten, werden zumeist aus Polymethylmethacrylat (PMMA) oder Polycarbonat (PC) im Spritzgießprozess hergestellt. Insbesondere Polycarbonat ist generell spannungsgefährdet. Durch eine Befestigung eines Anbauteils, beispielsweise einer Zierblende, an Befestigungsdomen der Beleuchtungseinrichtungen (beispielsweise durch Verschraubung) werden zusätzliche Spannungen in das Material eingebracht. Im Zusammenspiel mit spannungsrissauslösenden Medien (z. B. Scheibenreiniger in einer Waschstraße) kann es zum Reißen des Materials im Bereich der Befestigungsdome kommen. Eine Beleuchtungseinrichtung mit einem solchen Schadensbild muss komplett ausgetauscht werden.

In der DE 298 01 901 U1 wird ein Montageverbund eines Kraftfahrzeug-Scheinwerfers beschrieben, bei der eine Zierblende über ein in einer Ausbuchtung der Zierblende aufgenommenes Formstück am Scheinwerfer befestigt wird. Das Formstück selbst ist auf den oberen Rand der Abschlussscheibe aufgeklebt. Eine solche Lösung erscheint hinsichtlich der Langzeitstabilität des Montageverbundes nicht zuverlässig zu sein.

In der EP 2 565 079 A2 wird ein Montageverbund eines Kraftfahrzeug-Scheinwerfers beschrieben, bei der eine Vibrationseinrichtung an einem Befestigungsdom einer Abschlussscheibe befestigt wird.

Der vorliegenden Erfindung liegt die Aufgabe zu Grunde, einen Montageverbund mit den Merkmalen vom Oberbegriff des Patentanspruchs 1 derart zu verbessern, dass die genannten Nachteile des Standes der Technik vermieden werden.

Vorstehend genannte Aufgabe wird durch die Merkmale von Patentanspruch 1 gelöst. Vorteilhafte Ausbildungen beziehungsweise Weiterbildungen der Erfindung sind den Unteransprüchen entnehmbar.

Die Erfindung geht aus von einem Montageverbund einer Kraftfahrzeug-Beleuchtungseinrichtung, mit einem an einer Abschlussscheibe befestigten Anbauteil. Das Anbauteil kann beispielsweise eine Zierblende sein. Eine solche wird zumeist im oberen Bereich der Abschlussscheibe befestigt. Dies ist jedoch nicht zwingend. Das Anbauteil kann auch an einer anderen Stelle der Abschlussscheibe, beispielsweise im unteren Bereich befestigt werden. Zur zumindest mittelbaren Befestigung des Anbauteils weist die Abschlussscheibe wenigstens einen angeformten Befestigungsdom auf. In den Befestigungsdom greift ein Befestigungselement ein. Dies kann auf vielfältige Art und Weise geschehen. Beispielsweise kann eine Verschraubung oder auch eine Verrastung vorgesehen sein.

Nach einem ersten Merkmal der Erfindung wird nun vorgeschlagen, dass der wenigstens eine Befestigungsdom mit einem kappenartigen Element überdeckt ist.

Es hat sich in Versuchen gezeigt, dass durch diese Maßnahme die Widerstandsfähigkeit und die Langzeitstabilität des Montageverbundes deutlich erhöht werden kann.

Gemäß einer ersten Weiterbildung der Erfindung ist der Befestigungsdom, in einer Draufsicht gesehen, von einer um den Befestigungsdom umlaufenden Rippe umgeben. Dies erfolgt derart, dass eine umlaufende, rillenartige Vertiefung ausgebildet wird, in die das kappenartige Element teilweise hineinragt. Es hat sich gezeigt, dass auf diese Weise ein noch besserer Schutz des Montageverbundes erzielt werden kann.

Das kappenartige Element kann dadurch besser am Umfang des Befestigungsdoms gehalten werden.

Dieser Effekt kann noch dadurch verstärkt werden, wenn die rillenartige Vertiefung in ihrer Breite zum Vertiefungsgrund hin abnimmt.

Alternativ ist jedoch auch denkbar, dass der Befestigungsdom, in einer Draufsicht gesehen, von einer um den Befestigungsdom umlaufenden Rippe umgeben ist, auf der sich das kappenartige Element stirnseitig abstützt. Das kappenartige Element wird also bei Befestigung des Anbauteils auf diese Rippe aufgedrückt und dadurch stirnseitig gequetscht. Dies führt gleichermaßen zu einer guten Abdichtung in diesem Bereich.

Dabei hat es sich als vorteilhaft erwiesen, wenn das kappenartige Element aus einem gummielastischen Werkstoff ist.

Des Weiteren ist das Anbauteil an einem Träger befestigt, welcher durch das Befestigungselement am Befestigungsdom gehalten wird. In diesem Fall ist das Anbauteil also mittelbar am Befestigungsdom befestigt. Das Anbauteil selbst kann mit dem Träger beispielsweise verclipst sein.

Durch diese Maßnahme der Aufteilung in einen Träger und das eigentliche Anbauteil kann der Herstellungsprozess vereinfacht werden.

Nach einer weiteren Ausbildung der Erfindung kann der Träger mit einem dem Befestigungsdom zugewandten, umlaufenden Absatz versehen sein, welcher auf dem kappenartigen Element aufliegt.

Auf diese Weise kann bei der Befestigung von oben ein zusätzlicher Druck auf die Stirnseite des Befestigungsdoms ausgeübt werden und die Schutzwirkung des kappenartigen Elementes verstärkt werden.

Um auftretende Freiräume zwischen dem Träger und dem Anbauteil optimal abdecken zu können, wird nach weiteren Merkmalen der Erfindung durch das Befestigungselement wenigstens ein Dichtelement mit wenigstens einer harten und wenigstens einer weichen Komponente gehalten. Dabei dichtet das Dichtelement mit seiner weichen Komponente das Anbauteil gegen den Träger ab. Die harte Komponente des Dichtelementes ist zwischen einem Kopf des Befestigungselementes und dem kappenartigen Element angeordnet.

Dadurch ist über das Dichtelement eine gute Weiterleitung von Befestigungskräften möglich.

Um oberseitig eine Dichtwirkung zu erhöhen, kann zwischen dem Kopf des Befestigungselementes und der harten Komponente des Dichtelementes ein Dichtring (vorzugsweise aus gummiartigen Material) angeordnet sein.

Schließlich wird mit der Erfindung auch ein Kraftfahrzeug beansprucht, welches mit wenigstens einem erfindungsgemäßen Montageverbund ausgestattet ist.

Dabei kann der Montageverbund insbesondere Bestandteil eines Scheinwerfers oder auch einer Rückleuchte des Kraftfahrzeugs sein.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein Längsschnitt durch einen erfindungsgemäßen Montageverbund im Bereich des Vorderwagens eines Kraftfahrzeugs und
- Fig. 2: eine Darstellung gemäß Ansicht II aus Fig. 1, wobei der Vorderwagen eines Kraftfahrzeugs von vorne ersichtlich ist.

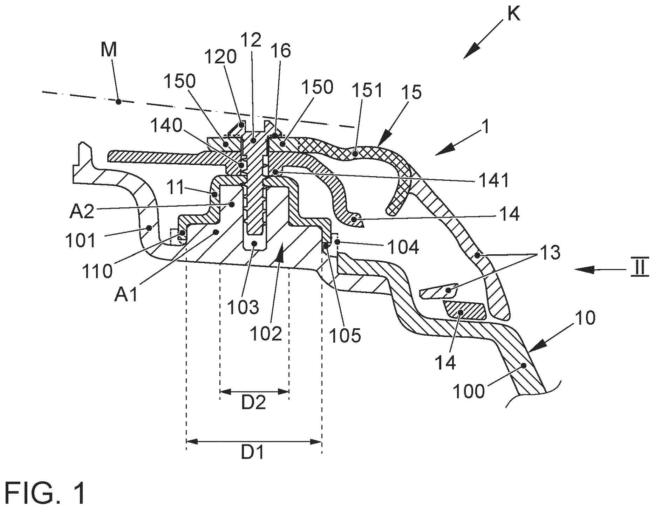

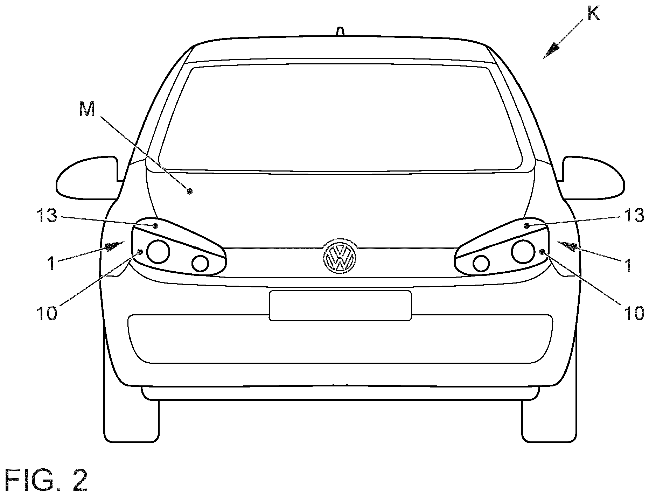

Es wird auf die Fig. 1 und 2 Bezug genommen.

Darin ist ein Kraftfahrzeug K ersichtlich, welches mit zwei erfindungsgemäßen Montageverbunden 1 als Bestandteil seiner Scheinwerfer ausgestattet ist.

Jeder Montageverbund 1 enthält eine Abschlussscheibe 10, an die über jeweils zwei Befestigungsdome 102 ein Anbauteil 13 im oberen Bereich der Abschlussscheibe 10 angebracht ist. Abweichend vom Ausführungsbeispiel können auch mehr oder weniger Befestigungsdome 102 vorhanden sein. Das Anbauteil 13 ist bevorzugt als Zierblende ausgestaltet.

Das Anbauteil 13 ist vorzugsweise aus Kunststoff (beispielsweise Polycarbonat) und zumindest auf seiner Sichtseite mit Aluminium bedampft. Dadurch wird ihm ein optisch ansprechendes, metallisches Aussehen verliehen. Wie ersichtlich, weist das Anbauteil 13 ein längliches, leistenartiges Aussehen auf.

Das Anbauteil 13 ist in nicht näher dargestellter Weise auf einen Träger 14 aufgeclipst.

Um konstruktionsbedingte Freiräume zwischen dem Anbauteil 13 und dem Träger 14 abzudecken, ist ein ebenso leistenartiges Dichtelement 15 vorhanden.

Das Dichtelement 15 weist eine harte Komponente 150 und eine weiche Komponente 151 auf, ist also ein Zweikomponenten-Bauteil. Mit dem Ende der weichen Komponente 151 stützt sich das Dichtelement 15 dichtend gegen eine Anlagefläche des Anbauteils 13 ab. Im Bereich der harten Komponente 150 wird das Dichtelement 15 zusammen mit dem Träger 14 an dem Befestigungsdom 102 unter Verwendung eines Befestigungselementes 12, das einen Kopf 120 aufweist, befestigt. Bevorzugt ist das Befestigungselement 12 als Schraube, der Kopf 120 des Befestigungselementes 12 als Schraubenkopf und der Befestigungsdom 102 als Schraubdom ausgeführt, so dass die Befestigung des Dichtelementes 15 zusammen mit dem Träger 14 an dem Befestigungsdom 102 durch Verschraubung erfolgt.

Die Abschlussscheibe 10 ist aus Kunststoff, vorzugsweise aus Polycarbonat hergestellt, und ist ebenfalls als ein Zweikomponenten-Bauteil ausgeführt. So weist die Abschlussscheibe 10 eine transparente Komponente 100 und eine an diese angespritzte schwarze Komponente 101 auf.

Im Bereich der schwarzen Komponente 101 ist der Befestigungsdom 102 vorhanden, welcher sich nach oben hin erstreckt. Insgesamt sind für die Befestigung des Anbauteils 13 zwei Befestigungsdome 102 eingesetzt.

Der Befestigungsdom 102 weist in einer Draufsicht von oben eine kreisrunde Form auf. Er wird durch einen ersten, umlaufenden Absatz A1 mit einem Durchmesser D1 und durch einen zweiten, umlaufenden Absatz A2 mit einem Durchmesser D2 gebildet.

Der Durchmesser D2 ist in etwa nur halb so groß wie der Durchmesser D1.

Wie aus der Fig. 1 ersichtlich, umfasst der Montageverbund 1 ein kappenartiges Element 11, welches der Außenkontur des Befestigungsdoms 102 angepasst ist und auf dem Befestigungsdom 102 aufliegt.

Gegen die Oberseite des kappenartigen Elementes 11 wird, bedingt durch die Befestigungskraft des Befestigungselementes 12, ein nach unten gerichteter, umlaufender Absatz 141 des Trägers 14 gedrückt.

Der umlaufende Absatz 141 umgibt dabei eine Durchgangsöffnung 140, die von dem Befestigungselement 12 durchdrungen wird.

Das Befestigungselement 12 greift in eine Befestigungsöffnung 103 hinein, welche konzentrisch von den Absätzen A1 und A2 umgeben ist.

Es ist erkennbar, dass zwischen dem Kopf 120 des Befestigungselementes 12 und dem Befestigungsdom 102 der umlaufende Absatz 141 des Trägers 14 und die harte Komponente 150 des Dichtelementes 15 angeordnet sind.

Der Träger 14 und das Dichtelement 15 werden durch den Kopf 120 des Befestigungselementes 12 in Richtung des auf dem Befestigungsdom 102 aufliegenden kappenartigen Elementes 11 gedrückt.

Zur Erhöhung der Schutzwirkung kann noch eine konzentrisch um den Befestigungsdom 102 umlaufende Rippe 104 einstückig an die Abschlussscheibe 10 angeformt werden. Die umlaufende Rippe 104 umgibt den Absatz A1 des Befestigungsdoms 102 konzentrisch, derart, dass eine rillenartige Vertiefung 105 ausgebildet wird.

Dabei nimmt die radiale Breite der Vertiefung 105 in Richtung zu ihrem Vertiefungsgrund hin ab. Die Abnahme kann beispielsweise konisch oder auch spitz zulaufend sein.

Hierdurch kann ein unterer Randbereich 110 des kappenartigen Elementes 11, welcher in die rillenartige Vertiefung 105 hinein ragt, noch besser an die Außenkontur des Absatzes A1 angedrückt werden.

Alternativ ist auch denkbar, die um den Befestigungsdom 102 umlaufende Rippe 104 so auszubilden, dass sich der untere Randbereich 110 des kappenartigen Elementes 11 auf der Rippe 104 stirnseitig abstützen kann (nicht näher dargestellt). Der untere Randbereich 110 des kappenartigen Elementes 11 wird also bei Befestigung des Anbauteils 13 durch das Befestigungselement 12 auf diese Rippe 104 aufgedrückt und dadurch stirnseitig gequetscht. Dies führt gleichermaßen zu einer guten Abdichtung in diesem Bereich.

Das kappenartige Element 11 ist vorzugsweise aus einem gummielastischen Material.

Um oberseitig eine noch bessere Abdichtung zu erzielen, kann zwischen der Hartkomponente 150 des Dichtelementes 15 und dem Kopf 120 des Befestigungselementes 12 ein Dichtring 16, ebenfalls aus gummielastischem Material, eingesetzt werden.

Abweichend vom Ausführungsbeispiel kann der Befestigungsdom 102 auch eine andere Form aufweisen. Er kann in der Draufsicht beispielsweise auch oval ausgebildet sein. Auch ist eine abweichende Anzahl von Absätzen denkbar. Die Ausbildung gemäß dem Ausführungsbeispiel hat sich jedoch als besonders vorteilhaft erwiesen.

### Bezugszeichenliste

- 1: Montageverbund einer Kraftfahrzeug-Beleuchtungseinrichtung

- 10: Abschlussscheibe
- 100: transparente Komponente der Abschlussscheibe
- 101: schwarze Komponente der Abschlussscheibe
- 102: Befestigungsdom
- 103: Befestigungsöffnung
- 104: umlaufende Rippe
- 105: rillenartige Vertiefung

- 11: kappenartiges Element
- 110: unterer Randbereich

- 12: Befestigungselement
- 120: Kopf des Befestigungselementes

- 13: Anbauteil

- 14: Träger für das Anbauteil
- 140: Durchgangsöffnung
- 141: umlaufender Absatz

- 15: Dichtelement
- 150: harte Komponente
- 151: weiche Komponente

- 16: Dichtring

- A1: erster Absatz
- A2: zweiter Absatz
- D1: Durchmesser des ersten Absatzes
- D2: Durchmesser des zweiten Absatzes
- K: Kraftfahrzeug
- M: Motorhaube

## Patentansprüche

1. Montageverbund (1) einer Kraftfahrzeug-Beleuchtungseinrichtung, mit einem an einer Abschlussscheibe (10) befestigten Anbauteil (13), wobei die Abschlussscheibe (10) zur zumindest mittelbaren Befestigung des Anbauteils (13) wenigstens einer angeformten Befestigungsdom (102) aufweist, in den ein Befestigungselement (12) eingreift, wobei der wenigstens eine Befestigungsdom (102) mit einem kappenartigen Element (11) überdeckt ist, wobei das Anbauteil (13) an einem Träger (14) befestigt ist, welcher durch das Befestigungselement (12) am Befestigungsdom (102) gehalten wird, **dadurch gekennzeichnet, dass** durch das Befestigungselement (12) wenigstens ein Dichtelement (15) mit wenigstens einer harten (150) und wenigstens einer weichen (151) Komponente gehalten wird, wobei das Dichtelement (15) das Anbauteil (13) gegen den Träger (14) abdichtet und die harte Komponente (150) des Dichtelementes (15) zwischen einem Kopf (120) des Befestigungselementes (12) und dem kappenartigen Element (11) angeordnet ist.

2. Montageverbund (1) nach Anspruch 1, **dadurch gekennzeichnet, dass** der Befestigungsdom (102), in einer Draufsicht gesehen, von einer um den Befestigungsdom (102) umlaufenden Rippe (104) umgeben ist, derart, dass eine umlaufende, rillenartige Vertiefung (105) ausgebildet wird, in die das kappenartige Element (11) teilweise (110) hineinragt.

3. Montageverbund (1) nach Anspruch 2, **dadurch gekennzeichnet, dass** die rillenartige Vertiefung (105) in ihrer Breite zum Vertiefungsgrund hin abnimmt.

4. Montageverbund (1) nach einem der vorhergehenden Ansprüche, **dadurch gekennzeichnet, dass** der Befestigungsdom (102), in einer Draufsicht gesehen, von einer um den Befestigungsdom (102) umlaufenden Rippe umgeben ist, auf der sich das kappenartige Element (11) stirnseitig abstützt.

5. Montageverbund (1) nach einem der vorhergehenden Ansprüche, **dadurch gekennzeichnet, dass** der Träger (14) mit einem dem Befestigungsdom (102) zugewandten, umlaufenden Absatz (141) versehen ist, welcher auf dem kappenartigen Element (11) aufliegt.

6. Montageverbund (1) nach einem der vorhergehenden Ansprüche, **dadurch gekennzeichnet, dass** zwischen dem Kopf (120) des Befestigungselementes (12) und der harten Komponente (150) des Dichtelementes (15) ein Dichtring (16) angeordnet ist.

7. Kraftfahrzeug (K) mit wenigstens einem Montageverbund (1) nach wenigstens einem der vorhergehenden Ansprüche.

## Claims

1. An assembly unit (1) of a motor vehicle lighting device, comprising an attachment (13) fastened to a front cover lens (10), the front cover lens (10) comprising, for at least indirect fastening of the attachment (13), at least one molded-on fastening dome (102), in which a fastening element (12) engages, the at least one fastening dome (102) being covered by a cap-like element (11), the attachment (13) being fastened to a carrier (14), which is held on the fastening dome (102) by the fastening element (12), **characterized in that** at least one sealing element (15) having at least one hard (150) and at least one soft (151) component is held by the fastening element (12), the sealing element (15) sealing the attachment (13) against the carrier (14), and the hard component (150) of the sealing element (15) being arranged between a head (120) of the fastening element (12) and the cap-like element (11).

2. The assembly unit (1) according to claim 1, **characterized in that** the fastening dome (102), seen in a plan view, is surrounded by a rib (104) extending around the fastening dome (102) such that a circumferential, groove-like depression (105) is formed, into which the cap-like element (11) partially (110) projects.

3. The assembly unit (1) according to claim 2, **characterized in that** the groove-like depression (105) decreases in width toward the depression base.

4. The assembly unit (1) according to any of the preceding claims, **characterized in that** the fastening dome (102), seen in a plan view, is surrounded by a rib extending around the fastening dome (102), on which rib the cap-like element (11) is supported on its end face.

5. The assembly unit (1) according to any of the preceding claims, **characterized in that** the carrier (14) is provided with a circumferential shoulder (141) which faces the fastening dome (102) and rests on the cap-like element (11).

6. The assembly unit (1) according to any of the preceding claims, **characterized in that** a sealing ring (16) is arranged between the head (120) of the fastening element (12) and the hard component (150) of the sealing element (15).

7. A motor vehicle (K) comprising at least one assembly unit (1) according to at least one of the preceding claims.

## Revendications

1. Ensemble de montage (1) d'un dispositif d'éclairage de véhicule automobile, comportant une pièce de construction (13) fixée à une lentille (10), dans lequel la lentille (10) présente, pour la fixation au moins indirecte de la pièce de construction (13), au moins un dôme de fixation (102) moulé, dans lequel vient en prise un élément de fixation (12), dans lequel l'au moins un dôme de fixation (102) est recouvert d'un élément (11) en forme de capuchon, dans lequel la pièce de construction (13) est fixée à un support (14), lequel est maintenu par l'élément de fixation (12) sur le dôme de fixation (102), **caractérisé en ce qu'**au moins un élément d'étanchéité (15) comportant au moins un composant dur (150) et au moins un composant mou (151) est maintenu par l'élément de fixation (12), dans lequel l'élément d'étanchéité (15) assure l'étanchéité de la pièce de construction (13) par rapport au support (14) et le composant dur (150) de l'élément d'étanchéité (15) est disposé entre une tête (120) de l'élément de fixation (12) et l'élément (11) en forme de capuchon.

2. Ensemble de montage (1) selon la revendication 1, **caractérisé en ce que** le dôme de fixation (102), vu de dessus, est entouré d'une nervure (104) périphérique autour du dôme de fixation (102), de manière à réaliser un évidement (105) périphérique en forme de rainure dans lequel l'élément en forme de capuchon (11) pénètre partiellement (110).

3. Ensemble de montage (1) selon la revendication 2, **caractérisé en ce que** l'évidement en forme de rainure (105) diminue en largeur jusqu'au fond de l'évidement.

4. Ensemble de montage (1) selon l'une des revendications précédentes, **caractérisé en ce que** le dôme de fixation (102), vu de dessus, est entouré d'une nervure périphérique autour du dôme de fixation (102) sur laquelle l'élément (11) en forme de capuchon s'appuie côté avant.

5. Ensemble de montage (1) selon l'une des revendications précédentes, **caractérisé en ce que** le support (14) est doté d'un épaulement périphérique (141) orienté vers le dôme de fixation (102), lequel repose sur l'élément (11) en forme de capuchon.

6. Ensemble de montage (1) selon l'une des revendications précédentes, **caractérisé en ce qu'**une bague d'étanchéité (16) est disposée entre la tête (120) de l'élément de fixation (12) et le composant dur (150) de l'élément d'étanchéité (15).

7. Véhicule automobile (K) comportant au moins un ensemble de montage (1) selon au moins l'une des revendications précédentes.
